# EUROPEAN PATENT APPLICATION

(11) **EP 4 534 485 A1**
(43) Date of publication of application: **09.04.2025**
(21) Application number: 23815918.0
(22) Date of filing: 25.05.2023
(51) Int. Cl.: C01G 39/00, B01J 23/887, B01J 35/10, B01J 37/08, C08K 3/011, C08K 3/24, C08L 101/00

(54) **COPPER CHROMIUM OXIDE SPINEL, RESIN COMPOSITION OF SAME, RESIN MOLDED ARTICLE, AND METHOD FOR PRODUCING COPPER CHROMIUM OXIDE SPINEL**

(30) Priority: 02.06.2022 JP 2022090173
(71) Applicant: DIC Corporation, Tokyo 174-8520 (JP)
(72) Inventor: TABUCHI, Minoru, Sakura-shi Chiba 285-8668 (JP); SEKINE, Ryosuke, Sakura-shi Chiba 285-8668 (JP); YAGI, Naoto, Sakura-shi Chiba 285-8668 (JP); OMICHI, Koji, Sakura-shi Chiba 285-8668 (JP); YUAN, Jianjun, Sakura-shi Chiba 285-8668 (JP)
(74) Representative: TBK
(86) International application number: PCT/JP2023/019458
(87) International publication number: WO 2023/234160

(57) **Abstract**

An object is to provide a copper chromium oxide spinel having a particle size suitably used when made into a resin molded article and plating bonding properties, a resin composition of the same, a resin molded article, and a method for producing the copper chromium oxide spinel. Specifically, provided is a copper chromium oxide spinel containing molybdenum and having a D50 of 2.0 µm or less.

## Description

### Technical Field

The present invention relates to a copper chromium oxide spinel containing molybdenum and a method for producing the same. Furthermore, it relates to a resin composition containing the copper chromium oxide spinel, a thermoplastic resin or a thermosetting resin, and an inorganic filler and a molded article of the same.

### Background Art

In recent years, in the fields of electronics and mechatronics, devices have become smaller, lighter, and more multifunctional. In the automotive field in particular, while sensors and modules are increasing due to the progress of connectivity, servicing, and automation, there is a demand to reduce vehicle weight for electrification and there is a strong demand to reduce the weight and size of mechanical components and electric circuit components. As techniques that can address this issue, techniques related to molded interconnect devices (MIDs) are attracting attention. MID is a technique for molding circuits, electrodes, and the like into a resin molded article, and by integrating circuits, electrodes, and the like into the resin molded article, it is possible to reduce the size and weight of components.

MID includes the one-time molding method in which the surface of the resin molded article is roughened and plated, the two-time molding method in which a resin for forming circuits and a resin for forming insulating parts are separately molded twice and then integrated, and the hot stamping method in which circuits and the like are formed directly on the resin molded article using a stamping die.

Among these, the laser direct structuring (LDS) technique, a type of the one-time molding method, has attracted particular attention from the viewpoint of being able to reduce manufacturing costs and being able to produce ultrafine circuits in a short period of time, for example. Note that the LDS technique is a technique in which when a laser is applied to a resin molded article containing a certain additive, and the surface of the part to which the laser has been applied is roughened and the additive is activated, thus enabling formation of a strong plated layer in the part to which the laser has been applied.

Given these circumstances, the additive that can be used for the LDS technique is being studied. For the additive, spinel type metal oxides are being commonly used (PTL 1 and 2) In particular, spinel type metal oxides containing copper have been utilized from the viewpoint of adhesion to copper-plated patterns.

PTL 1 shows a conductor track structure containing a high oxide having high thermal stability and having a spinel structure having resistance in an acidic or alkaline aqueous metallization bath, or a simple d-metal oxide or a mixture thereof, or a mixed metal oxide similar to the spinel structure.

PTL 2 shows a thermosetting resin composition for LDS containing a non-conductive metal compound forming metallic nuclei by the application of active energy rays in which the non-conductive metal compound contains one or more selected from the group consisting of spinel type metal oxides, metal oxides having two or more transition metal elements in which they are selected from Group 3 to Group 12 of the periodic table and the groups are adjacent to each other, and tin-containing oxides.

However, resin compositions containing these metal oxides have a problem in that the metallic wiring after plating may peel off from molded articles. Examples of factors that contribute to this include insufficient control of the particle shape and particle size of the metal oxides and their not being uniformly dispersed in the resin and weak bonding strength between the metal oxides, which serve as nuclei for plating deposition, and plated metal.

PTL 3 shows, as a method for producing a copper-chromium black agent, a method for producing a copper-chromium black agent in which chromium oxide, copper oxide, zinc oxide, and molybdenum oxide are mixed together at a ratio of 52 to 75%:22 to 44%:1 to 6%:0.1 to 4%, are solid-phase sintered at 820 to 960°C for 1 to 3 hours, and are adjusted to have a D99 of 5 to 5.5 µm by ball mill pulverization. However, the obtained particles have reduced crystallinity due to pulverization, and their particle size remains large, making them unsuitable as an additive for LDS.

NPL 1 shows, as a method for producing CuCr₂O₄ particles, a method for producing CuCr₂O₄ spinel nanoparticles having a step of stirring copper nitrate trihydrate and chromium nitrate nonahydrate in pure water, adding an ammonia solution thereto to adjust the pH to 8, then adding a CTAB ethanol solution and hydrazine thereto, and adjusting the molar ratio Cu:Cr:CTB:H₂O:hydrazine to 1:2:0.75:250:1; a step of subjecting the solution to hydrothermal treatment in an autoclave vessel at 180°C for 24 hours at atmospheric pressure; and a step of drying the obtained solid product at 120°C and then firing it at 750°C for 6 hours in the atmosphere. However, there is a problem in that the obtained particles are fine particles of 100 nm or less and are too small to be used as an additive for LDS.

### Citation List

### Patent Literature

PTL 1: Japanese Unexamined Patent Application Publication (Translation of PCT Application) No. 2004-534408
PTL 2: WO 2017/199639
PTL 3: Chinese Unexamined Patent Application Publication No. 110951281

### Non Patent Literature

NPL 1: Catal. Sci. Technol., 2014, 4, 4232-4241

### Summary of Invention

### Technical Problem

Given these circumstances, the present invention has been made to solve the above problems and an object thereof is to provide a copper chromium oxide spinel with a controlled particle size by a simple method and a method for producing the same.

### Solution to Problem

The inventors of the present invention have studied intensively to solve the above problems and have found that the particle size of the copper chromium oxide spinel can be easily controlled and a copper chromium oxide spinel containing molybdenum can be produced by using a molybdenum compound as a flux to complete the present invention.

That is, the present invention has the following aspects.

(1) A copper chromium oxide spinel containing molybdenum and having a D50 of 2.0 µm or less.
(2) The copper chromium oxide spinel according to (1) above, in which a molybdenum content in the copper chromium oxide spinel is 0.05 to 5.0% by mass in terms of a content (Mo₁) in terms of MoO₃ conversion with respect to 100% by mass of the copper chromium oxide spinel, which is determined by performing XRF analysis on the copper chromium oxide spinel.
(3) The copper chromium oxide spinel according to (1) or (2) above, in which a molybdenum content in a surface layer of the copper chromium oxide spinel is 0.05 to 15.0% by mass in terms of a content (Mo₂) in terms of MoO₃ conversion with respect to 100% by mass of the surface layer of the copper chromium oxide spinel, which is determined by performing XPS surface analysis on the copper chromium oxide spinel.
(4) The copper chromium oxide spinel according to any one of (1) to (3) above, in which a surface layer uneven presence ratio of molybdenum (Mo₂/Mo₁), which is a content (Mo₂) in terms of MoO₃ conversion with respect to 100% by mass of a surface layer of the copper chromium oxide spinel with respect to a content (Mo₁) in terms of MoO₃ conversion with respect to 100% by mass of the copper chromium oxide spinel, is 2.0 or more.
(5) The copper chromium oxide spinel according to any one of (1) to (3) above, having an average particle size of 0.1 to 10 µm.
(6) The copper chromium oxide spinel according to any one of (1) to (5) above, having a specific surface area measured by BET method of 0.01 to 10 m²/g.
(7) A method for producing the copper chromium oxide spinel according to any one of (1) to (6) above, the method including firing a copper compound and a chromium compound in presence of a molybdenum compound.
(8) The method for producing the copper chromium oxide spinel according to (7) above, in which the molybdenum compound is molybdenum trioxide.
(9) A resin composition containing:
   the copper chromium oxide spinel according to any one of (1) to (7) above;
   a thermoplastic resin or a thermosetting resin; and
   an inorganic filler.
(10) A resin molded article made by molding the resin composition according to (9) above.

### Advantageous Effects of Invention

The present invention can provide a copper chromium oxide spinel with a controlled particle size.

In addition, the present invention can provide a simple and highly productive method for producing the copper chromium oxide spinel.

In addition, the present invention can provide a resin composition containing the copper chromium oxide spinel and a molded article of the same.

### Brief Description of Drawings

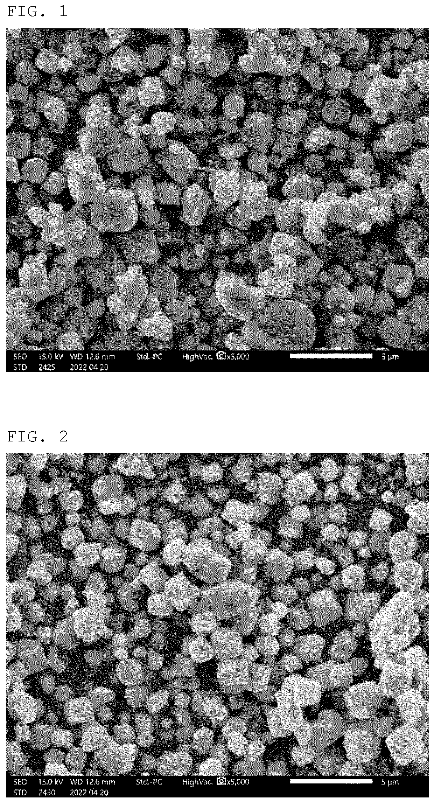

FIG. 1 is a SEM image of a copper chromium oxide spinel of Example 1.
FIG. 2 is a SEM image of a copper chromium oxide spinel of Example 2.

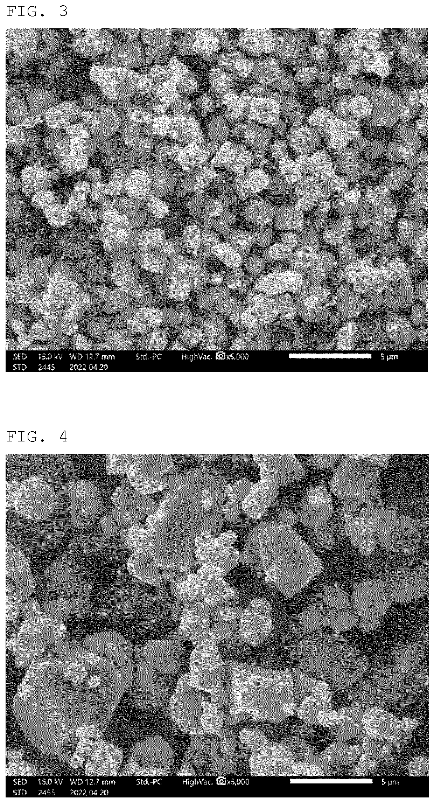

FIG. 3 is a SEM image of a copper chromium oxide spinel of Example 3.
FIG. 4 is a SEM image of a copper chromium oxide spinel of Comparative Example 1.

### Description of Embodiments

The following describes embodiments of a copper chromium oxide spinel, a method for producing a copper chromium oxide spinel, and a resin composition containing the copper chromium oxide spinel of the present invention.

### <Copper Chromium Oxide Spinel>

The copper chromium oxide spinel of the embodiment contains molybdenum. The copper chromium oxide spinel of the embodiment contains molybdenum and has excellent characteristics such as catalytic activity derived from molybdenum.

As to the molybdenum contained in the copper chromium oxide spinel of the embodiment, its state of presence and amount are not limited to particular ones, and it may be contained in the copper chromium oxide spinel as metallic molybdenum, molybdenum oxide, a partially reduced molybdenum compound, or the like. Molybdenum is considered to be contained in the copper chromium oxide spinel as MoO₃ but may also be contained in the copper chromium oxide spinel as MoO₂, MoO, a molybdate, or the like apart from MoO₃.

The form of molybdenum contained is not limited to a particular form and may be contained in the form of adhering to the surface of the copper chromium oxide spinel, contained in the form of substituting for part of the crystal structure of the copper chromium oxide spinel, contained in the state of an amorphous state, or a combination of these.

In the present specification, controlling a particle shape means that the particle shape is not amorphous. That is, in the present specification, the copper chromium oxide spinel with a controlled particle shape means the copper chromium oxide spinel the particle shape of which is not amorphous.

The copper chromium oxide spinel of the embodiment can easily control the particle size and the molybdenum content of the copper chromium oxide spinel to be obtained by controlling, for example, the amount of a molybdenum compound used as a raw material, the type of the molybdenum compound, a firing temperature, or the like in a method of production described below.

The average particle size of the copper chromium oxide spinel of the embodiment may be 0.1 to 10 µm, preferably 0.1 to 2 µm, and more preferably 0.1 to 1 µm. Being within the above range improves the plating adsorption performance when made into a resin composition for LDS, which is desirable.

In the present specification, for the "average particle size" of the copper chromium oxide spinel, in a two-dimensional image taken with a scanning electron microscope (SEM), the ratio (the shortest size/the longest size) between the shortest size (the shortest diameter: the shortest distance of an individual particle between two parallel line segments on the observation field of view or on the image) and the longest size (the longest diameter: the longest distance of an individual particle between two parallel line segments on the observation field of view or on the image) determined from particle images of primary particles of the copper chromium oxide spinel are calculated for each.

The value of the average particle size of the copper chromium oxide spinel shall be an average obtained from 50 or more copper chromium oxide spinels selected at random from among the particles having automorphism of the above object under measurement.

The median diameter D50 of the copper chromium oxide spinel of the embodiment calculated by the laser diffraction and scattering method may be 2.0 µm or less, 0.2 to 2.0 µm, or 1.0 to 2.0 µm. Being within the above range improves the plating adsorption performance when made into the LDS resin composition, which is preferred.

The median diameter D50 of a copper chromium oxide spinel sample calculated by the laser diffraction and scattering method can be determined as a particle size with a ratio of volume integration % of 50% in particle size distribution measured in dry form using a laser diffraction type particle size distribution analyzer.

The specific surface area of the copper chromium oxide spinel of the embodiment determined by the BET method may be 0.01 to 10 m²/g, 1 to 10 m²/g, or 3.5 to 10 m²/g. Being within the above range increases the number of active points, improving catalytic performance and plating adsorption performance, which is preferred.

The specific surface area is measured with a specific surface area meter (for example, BELSORP-mini manufactured by MicrotracBEL Corporation), and a surface area per gram of a sample measured from the amount of nitrogen gas adsorbed by the Brunauer-Emmett-Teller method (the BET method) is calculated as the specific surface area (m²/g).

The copper chromium oxide spinel of the embodiment contains copper chromite.

The copper chromium oxide spinel of the embodiment contains CuCr₂O₄ in an amount of preferably 90 to 99.9% by mass, more preferably 95 to 99.9% by mass, and even more preferably 98 to 99.9% by mass with respect to 100% by mass of the copper chromium oxide spinel.

The copper chromium oxide spinel of the embodiment contains molybdenum. A molybdenum content contained in the copper chromium oxide spinel can be measured by XRF analysis. It is preferably 0.05% by mass or more, more preferably 0.05 to 5.0% by mass, and even more preferably 0.1 to 2.5% by mass in terms of a content (Mo₁), which is determined by performing the XRF analysis on the copper chromium oxide spinel of the embodiment.

For the XRF analysis, an X-ray fluorescence analyzer (for example, Primus IV manufactured by Rigaku Corporation) can be used.

The content (Mo₁) in terms of MoO₃ conversion refers to a value determined from a MoO₃ amount obtained by converting the molybdenum content determined by performing the XRF analysis on the copper chromium oxide spinel using a calibration curve for MoO₃ conversion. Note that the content (Mo₁) is relative to 100% by mass of the copper chromium oxide spinel.

A molybdenum content contained in a surface layer of the copper chromium oxide spinel can be measured by X-ray photoelectron spectroscopy (XPS) surface analysis. The molybdenum content in the surface layer of the copper chromium oxide spinel of the embodiment is preferably 0.05% by mass or more, preferably 0.05 to 15.0% by mass, more preferably 1.0 to 10.0% by mass, and even more preferably 1.0 to 7.0% by mass in terms of a content (Mo₂), which is determined by performing the XPS surface analysis on the copper chromium oxide spinel. Being within the above range more activates copper of the copper chromium oxide spinel exposed by laser application and makes it easy for plating to bond, which is preferred. In addition, being within the above range improves, for example, the activity of carbonyl compounds and functionalized side rings of aromatic compounds as a catalyst for hydrogenation, which is preferred.

For the XPS analysis, a scanning X-ray photoelectron spectrometer (for example, QUANTERA SXM manufactured by ULVAC-PHI, Inc.) can be used.

The content (Mo₂) refers to a value determined as the content of MoO₃ with respect to 100% by mass of the surface layer of the copper chromium oxide spinel by performing the XPS surface analysis on the copper chromium oxide spinel to acquire a presence ratio (atom%) for each element and performing oxide conversion on the molybdenum content.

In the copper chromium oxide spinel of the embodiment, the molybdenum is preferably unevenly present in the surface layer of the copper chromium oxide spinel.

In the present specification, the "surface layer" refers to being within 10 nm of the surface of the copper chromium oxide spinel of the embodiment. This distance corresponds to XPS detection depth used for measurement in examples.

The "unevenly present in the surface layer" refers to a state in which the mass of molybdenum or a molybdenum compound per unit volume in the surface layer is larger than the mass of molybdenum or a molybdenum compound per unit volume in other than the surface layer.

In the copper chromium oxide spinel of the present invention, molybdenum being unevenly present in the surface layer of the copper chromium oxide spinel, as shown in the examples described below, can be determined by the fact that the content of molybdenum (Mo₂) in terms of MoO₃ conversion with respect to 100% by mass of the surface layer of the copper chromium oxide spinel, which is determined by performing the XPS surface analysis on the copper chromium oxide spinel, is larger than the content of molybdenum (Mo₁) in terms of MoO₃ conversion with respect to 100% by mass of the copper chromium oxide spinel, which is determined by performing the X-ray fluorescence (XRF) analysis on the copper chromium oxide spinel.

In the copper chromium oxide spinel of the embodiment, as an indicator for molybdenum to be unevenly present in the surface layer of the copper chromium oxide spinel, the copper chromium oxide spinel of the embodiment has a molybdenum surface layer uneven presence ratio (Mo₂/Mo₁), which is the content (Mo₂) determined by the XPS surface analysis with respect to the content (Mo₁) determined by the XRF analysis, of preferably 1.0 or more, more preferably 2.0 or more, and particularly preferably 10 or more and preferably 300 or less, more preferably 50 or less, and even more preferably 30 or less.

By making molybdenum or a molybdenum compound unevenly present in the surface layer of the copper chromium oxide spinel, excellent characteristics such as catalytic activity can be imparted more efficiently than when molybdenum or a molybdenum compound are made uniformly present not only in the surface layer but also other than the surface layer (an inner layer).

A copper content contained in the copper chromium oxide spinel of the embodiment can be measured by the XRF analysis. It is preferably 25.0% by mass or more, more preferably 30.0 to 40.0% by mass, and even more preferably 32.0 to 35.0% by mass in terms of a content (Cu₁), which is determined by performing the XRF analysis on the copper chromium oxide spinel of the embodiment.

The content (Cu₁) in terms of CuO conversion refers to a value determined from a CuO amount by converting the copper content determined by performing the XRF analysis on the copper chromium oxide spinel using a calibration curve for CuO conversion. Note that the content (Cu₁) is relative to 100% by mass of the copper chromium oxide spinel.

A copper content contained in the surface layer of the copper chromium oxide spinel can be measured by the XPS surface analysis. The copper content in the surface layer of the copper chromium oxide spinel of the embodiment is preferably 50.0% by mass or more, more preferably 55.0 to 80.0% by mass, and even more preferably 60.0 to 75.0% by mass in terms of a content (Cu₂), which is determined by performing the XPS surface analysis on the copper chromium oxide spinel. Being within the above range makes copper of the copper chromium oxide spinel activated by laser application present in a large amount and makes it easy for plating to bond, which is preferred.

The content (Cu₂) refers to a value determined as the content of CuO with respect to 100% by mass of the surface layer of the copper chromium oxide spinel by performing the XPS surface analysis on the copper chromium oxide spinel to acquire a presence ratio (atom%) for each element and performing oxide conversion on the copper content.

In the copper chromium oxide spinel of the embodiment, the copper is preferably unevenly present in the surface layer of the copper chromium oxide spinel.

The "unevenly present in the surface layer" refers to a state in which the mass of copper or a copper compound per unit volume in the surface layer is larger than the mass of copper or a copper compound per unit volume in other than the surface layer.

In the copper chromium oxide spinel of the present invention, copper being unevenly present in the surface layer of the copper chromium oxide spinel, as shown in the examples described below, can be determined by the fact that the content of copper (Cu₂) in terms of CuO conversion with respect to 100% by mass of the surface layer of the copper chromium oxide spinel, which is determined by performing the XPS surface analysis on the copper chromium oxide spinel, is larger than the content of copper (Cu₁) in terms of CuO conversion with respect to 100% by mass of the copper chromium oxide spinel, which is determined by performing the XRF analysis on the copper chromium oxide spinel.

In the copper chromium oxide spinel of the embodiment, as an indicator for copper to be unevenly present in the surface layer of the copper chromium oxide spinel, the copper chromium oxide spinel of the embodiment has a copper surface layer uneven presence ratio (Cu₂/Cu₁), which is the content (Cu₂) determined by the XPS surface analysis with respect to the content (Cu₁) determined by the XRF analysis, of preferably 1 or more, more preferably 1.5 or more, and particularly preferably 1.7 or more and preferably 3 or less and more preferably 2.5 or less.

By making copper or a copper compound unevenly present in the surface layer of the copper chromium oxide spinel, copper of the activated copper chromium oxide spinel is more exposed on the surface by laser application than when copper or a copper compound are made uniformly present not only in the surface layer but also other than the surface layer (the inner layer), resulting in more bonding points with plating and improved adhesion of plating, which is preferred.

The copper chromium oxide spinel of the embodiment can be provided as an aggregate of the copper chromium oxide spinel, and for the values of the molybdenum content and the copper content described above, values determined with the aggregate as a sample can be employed.

The copper chromium oxide spinel of the present invention may contain sodium and/or potassium apart from molybdenum.

### <Method for Producing Copper Chromium Oxide Spinel>

The method for producing a copper chromium oxide spinel of the embodiment includes firing a copper compound and a chromium compound in the presence of a molybdenum compound. More specifically, the method of production of the present invention is a method for producing the copper chromium oxide spinel and may include mixing together the copper compound, the chromium compound, and the molybdenum compound to form a mixture and firing the mixture.

By firing the copper compound and the chromium compound in the presence of the molybdenum compound, the copper chromium oxide spinel of a single composition can be produced more efficiently, and furthermore, it can be produced with its particle size controlled more easily than a case without the molybdenum compound used.

The method for producing a copper chromium oxide spinel of the embodiment can produce the copper chromium oxide spinel of the embodiment described above.

A preferred method for producing a copper chromium oxide spinel includes a step (a mixing step) of mixing together the copper compound, the chromium compound, and the molybdenum compound to form the mixture and a step (a firing step) of firing the mixture.

### [Mixing Step]

The mixing step is a step of mixing together the copper compound, the chromium compound, and the molybdenum compound to form the mixture.

The method of mixing is not limited to a particular method, and simple mixing that mixes together a powder of the molybdenum compound, a powder of the copper compound, and a powder of the chromium compound, mechanical mixing using a pulverizer or the like, mixing using a mortar or the like, mixing in a dry state or a wet state, and the like can be used.

For example, examples of the mixing in the wet state include a method of adding the powder of the molybdenum compound, the powder of the copper compound, and the powder of the chromium compound to a liquid medium and mixing them together in a stirring mill.

As the liquid medium, organic solvents, oils and fats, water, or the like can be used, and water is preferred because posttreatment is easy.

The stirring mill is not limited to a particular stirring mill so long as it is a medium stirring mill using a medium (beads, balls, or sand), and examples thereof include bead mills, ball mills, sand mills, and paint shakers. Paint shakers with balls as the medium are preferred because they are easy to handle.

The stirring time may be 5 to 240 minutes, 30 to 180 minutes, or 60 to 180 minutes from the viewpoint of being able to mix together raw materials.

For example, examples of the mixing in the dry state include manual methods such as putting the powder of the molybdenum compound, the powder of the copper compound, and the powder of the chromium compound in a bag, which is shaken or rubbed and ball mills, tube mills, vibration mills, and planetary mills using a medium (beads, balls, or sand). Planetary mills with balls as the medium are preferred because they are easy to handle.

### (Copper Compound)

The type of the copper compound is not limited to a particular type. For example, the copper compound may be monovalent or divalent one, and examples thereof include copper chloride, copper sulfate, copper sulfide, copper carbonate, and copper oxide. Copper carbonate and copper oxide are preferred from the viewpoint of ease of availability.

The shape of the copper chromium oxide spinel after firing hardly reflects the shape of the copper compound as one of the raw materials, and thus as the copper compound, for example, a spherical one, an amorphous one, aspect-having structures (wires, fibers, ribbons, tubes, and the like), and sheets can also be suitably used.

### (Chromium Compound)

The type of the chromium compound is not limited to a particular type. Examples of the chromium compound include chromium chloride, chromium sulfate, chromium sulfide, chromium carbonate, and chromium oxide, and chromium carbonate and chromium oxide are preferred from the viewpoint of ease of availability.

The shape of the copper chromium oxide spinel after firing hardly reflects the shape of the chromium compound as one of the raw materials, and thus as the chromium compound, for example, a spherical one, an amorphous one, aspect-having structures (wires, fibers, ribbons, tubes, and the like), and sheets can also be suitably used.

### <Molybdenum Compound>

Examples of the molybdenum compound include molybdenum oxide, molybdic acid, molybdenum sulfide, molybdenum silicide, silicomolybdic acid, magnesium molybdate, and molybdate compounds, and molybdenum oxide is preferred.

Examples of the molybdenum oxide include molybdenum dioxide (MoO₂) and molybdenum trioxide (MoO₃), and molybdenum trioxide is preferred.

The molybdate compounds are not limited so long as they are salt compounds of molybdenum oxoanions such as MoO₄²⁻, Mo₂O₇²⁻, Mo₃O₁₀²⁻, Mo₄O₁₃²⁻, Mo₅O₁₆²⁻, Mo₆O₁₉²⁻, Mo₇O₂₄⁶⁻, and Mo₈O₂₆⁴⁻· The molybdate compounds may be alkali metal salts, alkaline earth metal salts, or ammonium salts of molybdenum oxoanions.

Examples of the molybdate compounds include alkali metal salts of molybdenum oxoanions, and examples thereof include lithium molybdate, potassium molybdate, and sodium molybdate.

### The molybdate compounds may be hydrates.

The molybdenum compound is preferably at least one compound selected from the group consisting of molybdenum trioxide, lithium molybdate, potassium molybdate, and sodium molybdate, more preferably at least one compound selected from the group consisting of molybdenum trioxide, potassium molybdate, and sodium molybdate, and particularly preferably molybdenum trioxide.

When a molybdate compound is used, a molybdate compound formed by firing in advance a mixture of molybdenum oxide and a metal chloride (for example, a metal carbonate, a halogen salt, a sulfate, or the like) may be used. For example, in the case of sodium molybdate, sodium molybdate formed by firing a mixture of molybdenum oxide and sodium carbonate can be used.

A preferred combination of raw materials in the method for producing a copper chromium oxide spinel of the embodiment is the use of copper oxide, chromium trioxide, and molybdenum trioxide.

In the method for producing a copper chromium oxide spinel of the present invention, the molybdenum compound is used as a flux agent. In the present specification, this method of production using the molybdenum compound as the flux agent may be hereinafter simply referred to as the "flux method." By such firing, the copper compound, the chromium compound, and the molybdenum compound react with each other at a high temperature to partly form copper molybdate and chromium molybdate. The copper molybdate and the chromium molybdate are decomposed along with the formation of the copper chromium oxide spinel at a high temperature, during which part of molybdenum oxide is considered to be incorporated into the copper chromium oxide spinel. Part of molybdenum oxide evaporates to be removed from the system, but when sodium molybdate or the like is used as the molybdenum compound, the alkali metal compound and molybdenum oxide easily combine to form a molybdate again, which is hardly discharged out of the system and remains in the system.

For the formation mechanism of the molybdenum compound contained in the copper chromium oxide spinel, more specifically, it is considered that the formation of Mo-O-Cu and Mo-O-Cr by the reaction of Cu atoms and Cr atoms occurs in the copper chromium oxide spinel, and high-temperature firing causes the desorption of most Mo, but part of molybdenum remains in the particles while forming the Mo-O-Cu and Mo-O-Cr.

Molybdenum oxide that is not incorporated into the copper chromium oxide spinel can be recovered by sublimating it and reused. Thus, the amount of molybdenum oxide adhering to the surface of the copper chromium oxide spinel can be reduced, and the original properties of the copper chromium oxide spinel can be imparted to the maximum.

Meanwhile, alkali metal salts of molybdenum oxoanions do not vaporize even in the firing temperature range and can be easily recovered by washing after firing, and thus the amount of the molybdenum compound released outside a firing furnace is reduced, and production costs can significantly be reduced.

When, for example, sodium molybdate is used in the flux method, copper molybdate and chromium molybdate decompose in the presence of sodium molybdate in a liquid phase to form the copper chromium oxide spinel, and then crystals grow. Consequently, it is considered that the copper chromium oxide spinel with a low degree of flocculation or no flocculation can be easily obtained while preventing the evaporation of the flux (the sublimation of MoO₃) described above.

It is assumed that the above effect can be obtained also by substituting the molybdenum compound and a sodium compound for sodium molybdate. When the molybdenum compound and the sodium compound are used in combination, it is considered that the molybdenum compound and the sodium compound first react to each other to form sodium molybdate. Subsequently, as in the above, copper molybdate and chromium molybdate decompose in the presence of sodium molybdate in a liquid phase to form the copper chromium oxide spinel, and then crystals grow. Consequently, it is assumed that the copper chromium oxide spinel with a low degree of flocculation or no flocculation can be easily obtained while preventing the evaporation of the flux (the sublimation of MoO3) described above.

In the method for producing a copper chromium oxide spinel of the present invention, the blending amounts of the copper compound, the chromium compound, and the molybdenum compound used are not limited to particular amounts, and the molybdenum compound may be blended in an amount of 1 to 1,000 parts by mass or blended in an amount of 5 to 100 parts by mass with respect to 100 parts by mass of the total blending amount of the copper compound and the chromium compound in the raw materials, for example, in the mixture.

In the method for producing a copper chromium oxide spinel of the present invention, the molar ratio (Cu/Cr) of chromium to copper in the raw materials, for example, in the mixture, is basically 2, and the Cu/Cr may be in a range of 1.5 to 2.5 because excessive products or raw materials can be easily removed in a purification step, which will be described in detail below.

In the method for producing a copper chromium oxide spinel of the present invention, the value of the molar ratio (molybdenum/(copper + chromium)) between the molybdenum atoms in the molybdenum compound and the copper and chromium atoms in the copper compound and the chromium compound in the raw materials, for example, in the mixture is preferably 0.001 or more, more preferably 0.005 or more, even more preferably 0.01 or more, and particularly preferably 0.02 or more.

The upper limit of the molar ratio between the molybdenum atoms in the molybdenum compound and the copper and chromium atoms in the copper compound and the chromium compound in the raw materials, for example, in the mixture may be set as appropriate, and from the viewpoint of a reduction in the amount of the molybdenum compound used and improvement in production efficiency, for example, the value of the molar ratio (molybdenum/(copper + chromium)) may be 1 or less, 0.5 or less, 0.2 or less, or 0.1 or less.

As an example of the numerical range of the molar ratio (molybdenum/(copper + chromium) in the raw materials, for example, in the mixture, for example, the value of molybdenum/(copper + chromium) may be 0.001 to 1, 0.005 to 0.5, 0.01 to 0.2, or 0.02 to 0.1.

As shown in the examples described below, there is a tendency that as the amount of molybdenum used with respect to copper and chromium is increased, the copper chromium oxide spinel with a smaller primary particle size is more likely to be obtained.

By using the various compounds within the above range, the amount of the molybdenum compound contained in the copper chromium oxide spinel to be obtained becomes more appropriate, and the copper chromium oxide spinel with a controlled particle shape and particle size is easily obtained.

### (Other Additives)

The method for producing a copper chromium oxide spinel of the embodiment may include a step of firing the copper compound and the chromium compound in the presence of the molybdenum compound and a sodium compound and/or a potassium compound.

The method for producing a copper chromium oxide spinel of the embodiment, prior to the firing step, can include a step (the mixing step) of mixing together the copper compound, the chromium compound, the molybdenum compound, and the sodium compound and/or the potassium compound to form a mixture and can include a step (the firing step) of firing the mixture.

In the method of production of the embodiment, by using the sodium compound and/or the potassium compound in combination, it is easy to adjust the particle size of the copper chromium oxide spinel to be produced, and the copper chromium oxide spinel with a low degree of flocculation or no flocculation can be easily produced.

Here, a compound containing molybdenum and sodium, such as sodium molybdate, can be used instead of at least part of the molybdenum compound and the sodium compound. Similarly, a compound containing molybdenum and potassium, such as potassium molybdate, can also be used instead of at least part of the molybdenum compound and the potassium compound.

Thus, a step of mixing together the copper compound, the chromium compound, and a compound containing molybdenum and potassium and/or sodium to form a mixture is also regarded as the step of mixing together the copper compound, the chromium compound, the molybdenum compound, and the potassium compound and/or the sodium compound to form a mixture.

The compound containing molybdenum and sodium, which is suitable as the flux agent, can be produced, for example, in the process of firing with the molybdenum compound and the sodium compound, which are lower in price and more readily available, as raw materials. In this example, both the case in which the molybdenum compound and the sodium compound are used as the flux agent and the case in which the compound containing molybdenum and sodium is used as the flux agent are regarded as the case in which the molybdenum compound and the sodium compound are used as the flux agent, that is, in the presence of the molybdenum compound and the sodium compound.

The compound containing molybdenum and potassium, which is suitable as the flux agent, can be produced, for example, in the process of firing with the molybdenum compound and the potassium compound, which are lower in price and more readily available, as raw materials. In this example, both the case in which the molybdenum compound and the potassium compound are used as the flux agent and the case in which the compound containing molybdenum and potassium is used as the flux agent are regarded as the case in which the molybdenum compound and the potassium compound are used as the flux agent, that is, in the presence of the molybdenum compound and the potassium compound.

### (Sodium Compound)

The sodium compound is not limited to a particular sodium compound, and examples thereof include sodium carbonate, sodium molybdate, sodium oxide, sodium sulfate, sodium hydroxide, sodium nitrate, sodium chloride, and metallic sodium. Among these, sodium carbonate, sodium molybdate, sodium oxide, and sodium sulfate are preferably used from the viewpoint of ease of industrial availability and ease of handling.

Note that the sodium compounds described above may be used alone or in combination of two or more thereof.

Similarly to the above, sodium molybdate contains molybdenum and can thus also have the function as the molybdenum compound described above.

### (Potassium Compound)

The potassium compound is not limited to a particular potassium compound, and examples thereof include potassium chloride, potassium chlorite, potassium chlorate, potassium sulfate, potassium hydrogen sulfate, potassium sulfite, potassium hydrogen sulfite, potassium nitrate, potassium carbonate, potassium hydrogencarbonate, potassium acetate, potassium oxide, potassium bromide, potassium bromate, potassium hydroxide, potassium silicate, potassium phosphate, potassium hydrogen phosphate, potassium sulfide, potassium hydrogen sulfide, potassium molybdate, and potassium tungstate. In this case, the potassium compounds include isomers, as in the case of the molybdenum compounds. Among these, potassium carbonate, potassium hydrogencarbonate, potassium oxide, potassium hydroxide, potassium chloride, potassium sulfate, and potassium molybdate are preferably used, and potassium carbonate, potassium hydrogencarbonate, potassium chloride, potassium sulfate, and potassium molybdate are more preferably used.

Note that the potassium compounds described above may be used alone or in combination of two or more thereof.

Similarly to the above, potassium molybdate contains molybdenum and can thus also have the function as the molybdenum compound described above.

### (Metal Compound)

In the method for producing a copper chromium oxide spinel of the embodiment, a metal compound may further be used during firing if desired. The method of production, prior to the firing step, can include a step (the mixing step) of mixing together the copper compound, the chromium compound, the molybdenum compound, and the metal compound to form a mixture and can include a step (the firing step) of firing the mixture.

The metal compound is not limited to a particular metal compound and preferably contains at least one selected from the group consisting of Group II metal compounds and Group III metal compounds.

Examples of the Group II metal compounds include calcium compounds, strontium compounds, and barium compounds.

Examples of the Group III metal compounds include scandium compounds, yttrium compounds, lanthanum compounds, and cerium compounds.

The metal compounds described above mean oxides, hydroxides, carbonates, and chlorides of metal elements. For example, examples of the yttrium compounds include yttrium oxide (Y₂O₃), yttrium hydroxide, and yttrium carbonate. Among these, the metal compounds are preferably oxides of metal elements. Note that these metal compounds include isomers.

Among these, the metal compound is preferably a metal compound of third-period elements, a metal compound of fourth-period elements, a metal compound of fifth-period elements, or a metal compound of sixth-period elements, more preferably a metal compound of fourth-period elements or a metal compound of fifth-period elements, and even more preferably a metal compound of fifth-period elements. Specifically, calcium compounds, yttrium compounds, and lanthanum compounds are preferably used, calcium compounds and yttrium compounds are more preferably used, and yttrium compounds are particularly preferably used.

The metal compound is preferably used at a ratio of, for example, 0 to 1.2% by mass (for example, 0 to 1 mol%) with respect to the total amount of the chromium compound used in the mixing step.

### [Firing Step]

The firing step is a step of firing the mixture. The copper chromium oxide spinel according to the embodiment is obtained by firing the mixture. As described above, this method of production is called the flux method.

The flux method is classified as the solution method. The flux method is, more specifically, a method of crystal growth utilizing the fact that the crystal-flux two-component state diagram shows the eutectic type. The mechanism of the flux method is presumed to be as follows. That is, as a mixture of a solute and a flux is heated, the solute and the flux become a liquid phase. In this process, the flux is a melting agent, in other words, the solute-flux two-component state diagram shows the eutectic type, and thus the solute melts at a temperature lower than its melting point and forms a liquid phase. When the flux is evaporated in this state, the concentration of the flux lowers, in other words, the solute's melting point lowering effect by the flux is reduced, and crystal growth of the solute occurs driven by the evaporation of the flux (the flux evaporation method). Note that the solute and the flux can cause crystal growth of the solute also by cooling the liquid phase (the slow cooling method).

The flux method has advantages such as capability of undergoing crystal growth at temperatures much lower than the melting point, capability of precisely controlling the crystal structure, and capability of forming crystals having automorphism.

In the production of the copper chromium oxide spinel by the flux method using the molybdenum compound as the flux, the mechanism is not necessarily clear but is presumed to be due to, for example, the following mechanism. That is, when the copper compound and the chromium compound are fired in the presence of the molybdenum compound, copper molybdate and chromium molybdate are first formed. In this process, the copper molybdate and the chromium molybdate cause copper chromite crystals to grow at temperatures lower than the melting point of copper chromite, as can be understood from the above description. Then, for example, by evaporating the flux, copper molybdate and chromium molybdate decompose to undergo crystal growth, and thereby the copper chromium oxide spinel can be obtained. That is, the molybdenum compound functions as the flux, and via intermediates, that is, copper molybdate and chromium molybdate, the copper chromium oxide spinel is produced.

The above flux method can efficiently produce the copper chromium oxide spinel containing molybdenum and in which the molybdenum is unevenly present in the surface layer of the copper chromium oxide spinel.

The method of firing is not limited to a particular method and can be performed by any known and customary method. It is considered that the copper compound, the chromium compound, and the molybdenum compound react with each other during the process of firing to form copper molybdate and chromium molybdate. Furthermore, it is considered that when the firing temperature is 700°C or higher, copper molybdate and chromium molybdate decompose to form the copper chromium oxide spinel. In the copper chromium oxide spinel, it is considered that copper molybdate and chromium molybdate decompose to become copper oxide, chromium oxide, and molybdenum oxide, and then when copper chromite is formed, the molybdenum compound is incorporated into the copper chromium oxide spinel.

The state of the copper compound, the chromium compound, and the molybdenum compound during firing is not limited to a particular state, and it is only required that the molybdenum compound is present in the same space in which it can act on the copper compound and the chromium compound.

There is no particular limitation on the condition of the firing temperature, which is determined as appropriate taking into consideration the target particle size of the copper chromium oxide spinel, the formation of the molybdenum compound in the copper chromium oxide spinel, the shape of the copper chromium oxide spinel, and the like. The firing temperature may be 700°C or higher, which is close to the decomposition temperature of copper molybdate and chromium molybdate, 800°C or higher, 900°C or higher, or 950°C or higher. A higher firing temperature is considered to be one factor for a larger average particle size.

According to the results obtained in the examples described below, when the firing temperature is 900°C or higher, a particle-controlled copper chromium oxide spinel is easily obtained.

In general, when the shape and the like of the copper chromium oxide spinel obtained after firing is tried to be controlled, it is necessary to perform high-temperature firing exceeding 1,500°C, which is a major challenge for industrial use in terms of a burden on the firing furnace and fuel costs.

According to one embodiment of the present invention, even under conditions in which, for example, the highest firing temperature at which the copper compound and the chromium compound are fired is 1,500°C or lower, the formation of the copper chromium oxide spinel can be performed efficiently at low cost.

According to the method for producing a copper chromium oxide spinel of the embodiment, even at temperatures much lower than 1,500°C, the copper chromium oxide spinel having automorphism can be formed regardless of the shape of the precursor. From the viewpoint of efficiently producing the copper chromium oxide spinel, the firing temperature may be 1,500°C or lower or 1,000°C or lower.

The numerical range of the firing temperature at which the copper compound and the chromium compound are fired in the firing step may be, as an example, 700 to 1,500°C, 800 to 1,200°C, 900 to 1,000°C, or 950 to 1,000°C.

From the viewpoint of production efficiency, the temperature rising rate may be 20 to 600°C/h, 40 to 500°C/h, 100 to 400°C/h, or 200 to 400°C/h.
Being within the above range tends to control the particle size.

As to the time of firing, the temperature rising time to a certain firing temperature is preferably performed in a range of 15 minutes to 10 hours. The holding time at the firing temperature can be 5 minutes or longer and is preferably performed in a range of 5 minutes to 30 hours. To efficiently perform the formation of the copper chromium oxide spinel, a firing temperature holding time of 2 hours or longer is more preferred, and a firing temperature holding time of 2 to 15 hours is particularly preferred.

The atmosphere of firing is not limited to a particular atmosphere so long as the effects of the present invention are obtained, and, for example, an oxygen-containing atmosphere such as air or oxygen or an inert atmosphere such as nitrogen, argon, or carbon dioxide is preferred, and an air atmosphere is more preferred when the aspect of cost is considered.

The apparatus for firing is not necessarily limited, and what is called a firing furnace can be used. The firing furnace is preferably made of a material that does not react with molybdenum oxide that has sublimated, and furthermore, a highly sealed firing furnace is preferably used so that molybdenum oxide is efficiently utilized.

### [Cooling Step]

The method for producing a copper chromium oxide spinel may include a cooling step. The cooling step is a step of cooling the copper chromium oxide spinel that has undergone crystal growth in the firing step.

The cooling rate, which is not limited to a particular rate, is preferably 1 to 1,000°C/hour, more preferably 5 to 500°C/hour, and even more preferably 50 to 100°C/hour. When the cooling rate is 1°C/hour or more, the production time can be reduced, which is preferred. On the other hand, when the cooling rate is 1,000°C/hour or less, a firing vessel is less likely to break due to heat shock and can be used for a long term, which is preferred.

The method of cooling, which is not limited to a particular method of cooling, may be either natural cooling or use a cooling apparatus.

### [Posttreatment Step]

The method for producing a copper chromium oxide spinel of the present invention may further include a posttreatment step of removing at least part of the molybdenum as needed after the firing step.

Examples of the method include washing and high-temperature treatment. These can be performed in combination.

As described above, molybdenum involves sublimation during firing, and thus by controlling the firing time, the firing temperature, and the like, the molybdenum content present in the surface layer of the copper chromium oxide spinel can be controlled, and the content of molybdenum present in other than the surface layer (the inner layer) of the copper chromium oxide spinel and the state of presence thereof can be controlled.

Molybdenum can adhere to the surface of the copper chromium oxide spinel. As means other than the sublimation, the molybdenum can be removed by washing with water, an aqueous ammonia solution, an aqueous sodium hydroxide solution, or the like.

In this process, by changing as appropriate the concentration of water, the aqueous ammonia solution, and the aqueous sodium hydroxide solution used, the amount of them used, the washing part, the washing time, and the like, the molybdenum content in the copper chromium oxide spinel can be controlled.

Examples of the method of high-temperature treatment include a method of raising the temperature to the sublimation point or the boiling point of the molybdenum compound or higher.

### [Pulverization Step]

A fired product obtained through the firing step may not meet the optimal particle size range for the use under consideration due to flocculation of the copper chromium oxide spinel. Thus, the copper chromium oxide spinel may be pulverized to meet the suitable particle size range as needed.

The method for pulverizing the fired product is not limited to a particular method, and conventionally known methods of pulverization, such as ball mills, jaw crushers, jet mills, disk mills, spectro mills, grinders, and mixer mills, can be used.

### [Classification Step]

The fired product containing the copper chromium oxide spinel obtained by the firing step may be subjected to classification processing as appropriate to adjust the particle size range. The "classification processing" refers to the operation of grouping particles according to the size of the particles.

Classification may be either wet type or dry type, and from the viewpoint of productivity, dry classification is preferred. Dry classification includes classification with a sieve and wind classification, which performs classification through the difference between centrifugal force and fluid drag force. From the viewpoint of classification accuracy, wind classification is preferred, which can be performed using classifiers such as airflow classifiers utilizing the Coanda effect, swirling airflow type classifiers, forced vortex centrifugal classifiers, and semi-free vortex centrifugal classifiers.

The pulverization step and the classification step described above can be performed at necessary stages. By the presence or absence of these pulverization and classification and the selection of conditions for those, for example, the particle size of the copper chromium oxide spinel to be obtained can be adjusted.

The copper chromium oxide spinel of the embodiment or the copper chromium oxide spinel obtained by the method of production of the embodiment has a low degree of flocculation or no flocculation and is thus preferred from the viewpoint of easily exhibiting its original properties, being more excellent in its own handleability, and being more excellent in dispersibility when it is used dispersed in a dispersed medium.

The method for producing a copper chromium oxide spinel of the embodiment can easily produce a copper chromium oxide spinel with a low degree of flocculation or no flocculation and thus has an excellent advantage that a copper chromium oxide spinel having desired excellent properties can be produced with high productivity even without performing the pulverization step or the classification step.

According to the method for producing a copper chromium oxide spinel of the embodiment described above, it is possible to produce a copper chromium oxide spinel containing molybdenum, with its shape controlled, and with high quality with high efficiency.

### (Uses)

The copper chromium oxide spinel of the present invention contains molybdenum and has a precisely controlled particle size and can thus suitably be used in catalysts and resin compositions. Specific examples of its uses include, but not limited to, synthetic reaction catalysts, exhaust gas purification catalysts, heat-resistant pigments, and resin compositions for LDS.

### <Catalyst>

The copper chromium oxide spinel of the present invention can suitably be used as catalysts. Specific examples thereof include uses as reaction catalysts used for organic synthesis such as hydrogenation, oxidation, alkylation, and cyclization reactions and purification catalysts used for the purification of automotive exhaust gases such as volatile organic compounds (VOCs) and NOₓ. The copper chromium oxide spinel of the present invention contains molybdenum and can thus have higher catalytic functions than conventional copper chromium oxide spinels.

### <Resin Composition>

The copper chromium oxide spinel of the present invention can suitably be used for resin compositions. Specifically, as a method for obtaining a resin composition from the copper chromium oxide spinel of the present invention, it is obtained by thoroughly melting and kneading the copper chromium oxide spinel, a thermoplastic resin, and an inorganic filler until becoming uniform using an extruder, a kneader, a roll, or the like as needed and cooling the kneaded product. The shape of the resin composition to be obtained may be any shape such as a pellet shape when the thermoplastic resin is used and may be pulverized to an appropriate size and made into a tablet shape with a tabletting machine or the like when a thermosetting resin is used.

The resin composition for LDS may further contain clay minerals, fillers, coupling agents, and other additives as optional components.

The content of the copper chromium oxide spinel in the resin composition may be contained in an amount of more than 0 part by mass, preferably 1 part by mass or more, and more preferably 5 parts by mass or more as a lower limit and may be preferably less than 30 parts by mass and more preferably less than 20 mass parts as an upper limit with respect to 100 parts by mass of the resin composition. Being within the above range can achieve good platability of a molded article to be obtained.

The thermoplastic resin is not limited to a particular thermoplastic resin, and examples thereof include polyester resins, polyarylene sulfide resins, polyamide resins, polyimide resins, polyetherimide resins, polycarbonate resins, polyphenylene ether resins, polysulfone resins, polyethersulfone resins, polyetheretherketone resins, polyetherketone resins, polyarylene resins, syndiotactic polystyrene resins, polyethylene resins, polypropylene resins, polytetrafluoroethylene resins, polyvinylidene fluoride resins, polystyrene resins, acrylonitrile-butadiene-styrene (ABS) resins, phenolic resins, urethane resins, and liquid crystal polymers. These resins may be used alone or in combination of two or more thereof. Among these, preferred are polyarylene sulfide resins, polyamide resins, polyetherimide resins, polycarbonate resins, polyphenylene ether resins, polysulfone resins, polyethersulfone resins, polyetheretherketone resins, polyetherketone resins, polyarylene resins, and syndiotactic polystyrene resins, and from the viewpoint of maintaining the adhesion of plating, polyarylene sulfide resins and polyamide resins, which have high laser sensitivity, are particularly preferred.

The thermosetting resin is not limited to a particular thermosetting resin, and examples thereof include epoxy resins, phenolic resins, oxetane resins, (meth)acrylate resins, unsaturated polyester resins, diaryl phthalate resins, and maleimide resins. These resins may be used alone or in combination of two or more thereof. Among these, from the viewpoint of improving curability, preservability, heat resistance, moisture resistance, and chemical resistance, epoxy resins are particularly preferred.

The blending ratio of the thermoplastic resin or the thermosetting is in a range from preferably 5% by mass or more and more preferably 10% by mass or more to preferably 40% by mass or less and more preferably 20% by mass or less with respect to the entire mass of the resin composition. When the blending ratio of the thermoplastic resin or the thermosetting resin with respect to the entire mass of the resin composition is 5% by mass or more, the plating deposition rate of the molded article to be obtained can be improved, which is preferred. In addition, from the viewpoint of the adhesion of the plating of the molded article to be obtained and the viewpoint of filling properties and molding stability, the blending ratio is preferably 40% by mass or less.

Examples of the inorganic filler include fused silica, crystalline silica, cristobalite, alumina, silicon nitride, aluminum nitride, aluminum hydroxide, boron nitride, titanium oxide, glass fibers, alumina fibers, zinc oxide, talc, and calcium carbide. These inorganic fillers may be used alone or in combination of two or more thereof. From the viewpoint of improvement in the dispersibility of the resin composition, fused silica and crystalline silica are more preferred, and from the viewpoint of improvement in the mechanical strength of the molded article, glass fibers are more preferred.

The resin composition can blend clay minerals as an optional component. The clay minerals, exhibiting a synergistic effect with the copper chromium oxide spinel of the present invention, has the function of improving the plating performance of the molded article to be obtained and the bonding strength of a plating layer. From the viewpoint of obtaining a practical plating deposition rate for the molded article to be obtained, the clay minerals are preferably uniformly contained in the resin composition as is the case with the copper chromium oxide spinel.

For the clay minerals, layered and cleavable ones are used. The clay minerals are not limited to particular clay minerals, and examples thereof include carbonate minerals and silicate minerals.

The fillers are not limited to particular fillers, and examples thereof include fibrous fillers such as carbon fibers, silane glass fibers, ceramic fibers, aramid fibers, metal fibers, potassium titanate fibers, silicon carbide fibers, and calcium silicate (wollastonite); and non-fibrous fillers such as glass beads, glass flakes, barium sulfate, clay, pyrophyllite, bentonite, sericite, attapulgite, ferrite, calcium silicate, calcium carbonate, magnesium carbonate, glass beads, zeolite, and calcium sulfate. These fillers may be used alone or in combination of two or more thereof. These fillers have functions such as further imparting mechanical strength to the molded article.

Examples of the coupling agents include, as silane coupling agents, epoxy group-containing alkoxysilane compounds such as γ-glycidoxypropyltrimethoxysilane, γ-glycidoxypropyltriethoxysilane, and β-(3,4-epoxycyclohexyl)ethyltrimethoxysilane; isocyanato group-containing alkoxysilane compounds such as γ-isocyanatopropyltrimethoxysilane, γ-isocyanatopropyltriethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane, and γ-isocyanatopropyltrichlorosilane; amino group-containing alkoxysilane compounds such as γ-(2-aminoethyl)aminopropylmethyldimethoxysilane, γ-(2-aminoethyl)aminopropyltrimethoxysilane, and γ-aminopropyltrimethoxysilane; and hydroxy group-containing alkoxysilane compounds such as γ-hydroxypropyltrimethoxysilane and γ-hydroxypropyltriethoxysilane. These silane coupling agents may be used alone or in combination of two or more thereof. These coupling agents have the function of imparting mechanical strength, apart from imparting adhesion to different materials, to the molded article.

Examples of the other additives include curing agents, curing accelerators, mold release agents, flame retardants, light stabilizers, heat stabilizers, alkalis, elastomers, titanium oxide, antioxidants, hydrolysis resistance modifiers, matting agents, UV absorbers, nucleating agents, plasticizers, dispersants, antistatic agents, coloring inhibitors, gelation inhibitors, and colorants.

### <Resin Molded Article>

The method for obtaining a resin molded article from the resin composition of the present invention is not limited to a particular method, and known methods can be employed as appropriate, and examples thereof include mold molding such as injection molding, injection compression molding, and transfer molding, extrusion molding, sheet molding, thermoforming, rotational molding, laminate molding, press molding, blow molding, and melt molding.

The obtained molded article is suitably used for wiring and circuits for built-in antennas, touch sensors, and chip packages because the surface layer of the molded article is roughened by laser direct structuring on the surface or the inside, plating treatment is applied, and thereby plating can be deposited only on a roughened area.

Examples of the method for roughening the surface layer include lasers. The wavelength of the laser can be selected as appropriate from the range of 150 to 12,000 nm and is preferably 185 nm, 248 nm, 254 nm, 308 nm, 355 nm, 532 nm, 1,064 nm or 10,600 nm.

The plating treatment may be either electrolytic plating or electroless plating. The laser application described above roughens the surface layer of the molded article, exposing part of the activated copper chromium oxide spinel in the resin composition. With this, during the plating treatment, plating is deposited only on the roughened area, and circuits or the like can be formed. As a plating solution, known plating solutions can be used as appropriate without any particular limitation, and plating solutions containing required metal components such as Cu, Ni, and Ag can be used.

### [Examples]

The following describes the present invention more specifically by means of examples and comparative examples. In the following, "parts" and "%" are on a mass basis unless otherwise noted. A copper chromium oxide spinel was synthesized under the following conditions, and measurement or calculation and evaluation were performed under the following conditions.

### <Synthesis of Copper Chromium Oxide Spinel>

### (Example 1)

Copper oxide (II) (a reagent manufactured by Kanto Chemical Co., Inc., CuO) in an amount of 7.95 parts, 15.20 parts of chromium oxide (III) (a reagent manufactured by Kanto Chemical Co., Inc., Cr₂O₃), 1.16 parts of molybdenum trioxide (manufactured by Nippon Inorganic Colour & Chemical Co., Ltd.), 30 parts of ion exchanged water, and 120 parts of zirconia beads 5 mm in diameter were charged into a 100 ml polypropylene bottle and mixed together and pulverized using a paint shaker for 120 minutes to obtain a mixture. The obtained mixture was transferred to a metal vat and dried in an oven at 120°C, and the dried object was pulverized with a mixer (manufactured by Osaka Chemical Co., Ltd.). The pulverized raw materials were put into a crucible and fired in a ceramic electric furnace at 950°C for 10 hours. Note that the temperature was raised at 5°C/minute. After the temperature was lowered, the crucible was taken out to obtain a black powder. Subsequently, the black powder was dispersed in 300 mL of 0.25% ammonia water, and the dispersion solution was stirred at room temperature (25 to 30°C) for 2 hours, passed through a 100 µm sieve, filtered to remove the ammonia water, washed with water, and dried to obtain a copper chromium oxide spinel.

### (Example 2)

Copper oxide (II) (a reagent manufactured by Kanto Chemical Co., Inc., CuO) in an amount of 7.95 parts, 15.20 parts of chromium oxide (III) (a reagent manufactured by Kanto Chemical Co., Inc., Cr₂O₃), 2.32 parts of molybdenum trioxide (manufactured by Nippon Inorganic Colour & Chemical Co., Ltd.), and 120 parts of balls 5 mm in diameter were charged into a planetary mill and mixed together and pulverized at 250 rpm for 120 minutes every 15 minutes to obtain a mixture. The obtained mixture was transferred to a metal vat and dried in an oven at 120°C, and the dried object was pulverized with a mixer (manufactured by Osaka Chemical Co., Ltd.). The pulverized raw materials were put into a crucible and fired in a ceramic electric furnace at 950°C for 10 hours. Note that the temperature was raised at 5°C/minute. After the temperature was lowered, the crucible was taken out to obtain a black powder. Subsequently, the black powder was dispersed in 300 mL of 0.25% ammonia water, and the dispersion solution was stirred at room temperature (25 to 30°C) for 2 hours, passed through a 100 µm sieve, filtered to remove the ammonia water, washed with water, and dried to obtain a copper chromium oxide spinel.

### (Example 3)

A copper chromium oxide spinel was obtained in the same manner as in Example 2 except that the firing temperature was changed to 900°C.

### (Comparative Example 1)

Copper oxide (II) (a reagent manufactured by Kanto Chemical Co., Inc., CuO) in an amount of 7.95 parts and 15.20 parts of chromium oxide (III) (a reagent manufactured by Kanto Chemical Co., Inc., Cr₂O₃) were put into a crucible and fired in a ceramic electric furnace at 900°C for 10 hours. Note that the temperature was raised at 5°C/minute. After the temperature was lowered, the crucible was taken out to obtain a dark green powder. Subsequently, the dark green powder was dispersed in 300 mL of 0.25% ammonia water, and the dispersion solution was stirred at room temperature (25 to 30°C) for 2 hours, passed through a 100 µm sieve, filtered to remove the ammonia water, washed with water, and dried to obtain a dark green powder.

Compared to Examples 1 to 3, the obtained copper chromium oxide spinel was not controlled to the desired range in its particle size due to an incomplete reaction, and impurities remained. Furthermore, when made into a resin composition, it is not uniformly dispersed, and because it does not contain molybdenum, the activation of copper by a laser is not expected, resulting in poor adhesion to plating.

### [Crystal Structure Analysis: X-Ray Diffraction (XRD) Method]

A sample powder was filled in a holder for a measurement sample with a depth of 0.5 mm, which was set in a wide-angle X-ray diffraction (XRD) apparatus (Ultima IV manufactured by Rigaku Corporation) and was subjected to measurement under the conditions of Cu/Kα rays, 40 kV/40 mA, a scanning speed of 2°/min, and a scanning range of 10 to 70°.

### [Specific Surface Area Measurement of Copper Chromium Oxide Spinel]

The specific surface area of the copper chromium oxide spinel was measured with a specific surface area meter (BELSORP-mini manufactured by MicrotracBEL), and the surface area per gram of the sample measured from the amount of the adsorbed nitrogen gas by the BET method was calculated as the specific surface area (m²/g).

### [Median Diameter Measurement]

The particle size distribution of the sample powder was measured in dry form using a laser diffraction type dry particle size distribution analyzer (HELOS (H3355) & RODOS manufactured by Japan Laser Corporation) under the conditions of a dispersion pressure of 3 bar and a suction pressure of 90 mbar. The particle size at the point where the distribution curve of volume integration % intersects a horizontal axis of 50% was determined as D50.

### [Average Particle Size Measurement]

Each sample was observed using a scanning electron microscope (JCM-7000 manufactured by JEOL Ltd.), the particle size of 50 particles were measured at random, and the average thereof was calculated as an average particle size.

### [X-Ray Fluorescence (XRF) analysis]

About 70 mg of a sample powder was taken on a filter paper and covered with a PP film, and X-ray fluorescence (XRF) analysis was performed on the following conditions using an X-ray fluorescence analyzer Primus IV (manufactured by Rigaku Corporation).

### Measuring conditions

EZ scan mode
Measured elements: F to U
Measurement time: standard
Measurement diameter: 10 mm
Residue (balance component): none

By performing oxide conversion on a copper content, a chromium content, and a molybdenum content of the copper chromium oxide spinel obtained by the XRF analysis, a result of a MoO₃ content (Mo₁) with respect to 100% by mass of the copper chromium oxide spinel was acquired.

### [XPS Surface Analysis]

For surface elemental analysis for the sample powder, using QUANTERA SXM manufactured by ULVAC-PHI, Inc., and using monochromatized Al-Kα as an X-ray source, the measurement of X-ray photoelectron spectroscopy (XPS) was performed. In 1,000 µm square area measurement, an average of n = 3 measurement was acquired for each element in terms of atom%.

By performing oxide conversion on copper and chromium contents of the surface layer and a molybdenum content of the surface layer of the copper chromium oxide spinel obtained by the XPS analysis, a MoO₃ content (Mo₂) (% by mass) with respect to 100% by mass of the surface layer of the copper chromium oxide spinel was determined.

### [Measurement of Isoelectric Point]

Zeta potential measurement was performed with a zeta potential measurement apparatus (Malvern Instruments, Zetasizer Nano ZSP). A sample in an amount of 20 mg and 10 mL of a 10 mM aqueous KCl solution were stirred with Awatori Rentaro (Thinky Corporation, ARE-310) for 3 minutes on the stirring and defoaming mode, and a supernatant obtained after being left to stand for 5 minutes was used as a sample to be measured. Using an autotitrator, 0.1 N HCl was added to the sample, zeta potential measurement was performed in a range up to pH = 2 (applied voltage: 100 V, the Monomodl mode), and the pH of the isoelectric point, in which the potential became zero, was evaluated.

**[Table 1]**

| | Synthesis | | | | | |
|---|---|---|---|---|---|---|
| | Raw materials | | | Amount of flux agent* | Mo/ (Cu+Cr) | Firing condition |
| | CuO | Cr2O3 | MoO₃ | | | |
| | Parts | Parts | Parts | Parts by mass | Molar ratio | °C |
| Example 1 | 7.95 | 15.2 | 1.16 | 5.0 | 0.027 | 950 |
| Example 2 | 7.95 | 15.2 | 2.32 | 10.0 | 0.054 | 950 |
| Example 3 | 7.95 | 15.2 | 2.32 | 10.0 | 0.054 | 900 |
| Comparative Example 1 | 7.95 | 15.2 | - | - | - | 950 |

| | | | | | | |
|---|---|---|---|---|---|---|
| *Total parts by mass of MoO₃ to a total of 100 parts by mass of CuO and Cr₂O₃ | | | | | | |

**[Table 2]**

| | Evaluation | | | | | | | | | | | | |
|---|---|---|---|---|---|---|---|---|---|---|---|---|---|
| | XRF | | | XPS | | | Surface uneven presence ratio | | XRD | Average particle size | Particle size | Isoelectric point | BET |
| | CuO | Cr₂O₃ | MoO₃ | CuO | Cr2O3 | MoO₃ | Mo2/Mo1 | Cu2/Cu1 | | Size | D50 | pH | |
| | % by mass | % by mass | % by mass | % by mass | % by mass | % by mass | | | | µm | µm | | m²/g |
| Example 1 | 33.7 | 65.5 | 0.2 | 62.7 | 31.9 | 5.4 | 25.35 | 1.86 | Spinel structure | 2.0 | 1.52 | 3.91 | 4.09 |
| Example 2 | 33.4 | 65.8 | 0.3 | 71.7 | 24.4 | 3.9 | 13.27 | 2.15 | Spinel structure | 2.0 | 1.91 | 4.45 | 7.60 |
| Example 3 | 33.2 | 66.1 | 0.2 | 61.6 | 35.3 | 2.7 | 12.16 | 1.86 | Spinel structure | 1.5 | 1.67 | 4.16 | 8.91 |
| Comparative Example 1 | 27.9 | 72.0 | N. D. | | | | | | Spinel structure + impurities | 4.0 | 3.41 | 2.06 | 0.82 |

| | | | | | | | | | | | | | |
|---|---|---|---|---|---|---|---|---|---|---|---|---|---|
| *Being less than 100% is because of impurities originating from raw materials. | | | | | | | | | | | | | |

## Claims

1. A copper chromium oxide spinel comprising molybdenum and having a D50 of 2.0 µm or less.

2. The copper chromium oxide spinel according to claim 1, wherein a molybdenum content in the copper chromium oxide spinel is 0.05 to 5.0% by mass in terms of a content (Mo₁) in terms of MoO₃ conversion with respect to 100% by mass of the copper chromium oxide spinel, which is determined by performing XRF analysis on the copper chromium oxide spinel.

3. The copper chromium oxide spinel according to claim 1 or 2, wherein a molybdenum content in a surface layer of the copper chromium oxide spinel is 0.05 to 15.0% by mass in terms of a content (Mo₂) in terms of MoO₃ conversion with respect to 100% by mass of the surface layer of the copper chromium oxide spinel, which is determined by performing XPS surface analysis on the copper chromium oxide spinel.

4. The copper chromium oxide spinel according to claim 1, wherein a surface layer uneven presence ratio of molybdenum (Mo₂/Mo₁), which is a content (Mo₂) in terms of MoO₃ conversion with respect to 100% by mass of a surface layer of the copper chromium oxide spinel with respect to a content (Mo₁) in terms of MoO₃ conversion with respect to 100% by mass of the copper chromium oxide spinel, is 2.0 or more.

5. The copper chromium oxide spinel according to claim 1, having an average particle size of 0.1 to 10 µm.

6. The copper chromium oxide spinel according to claim 1, having a specific surface area measured by BET method of 0.01 to 10 m²/g.

7. A method for producing the copper chromium oxide spinel according to claim 1, the method comprising firing a copper compound and a chromium compound in presence of a molybdenum compound.

8. The method for producing the copper chromium oxide spinel according to claim 7, wherein the molybdenum compound is molybdenum trioxide.

9. A resin composition comprising:
the copper chromium oxide spinel according to claim 1 or 4;
a thermoplastic resin or a thermosetting resin; and
an inorganic filler.

10. A resin molded article made by molding the resin composition according to claim 8.
